# EUROPÄISCHE PATENTSCHRIFT

(11) **EP 2 404 015 B1**
(45) Veröffentlichungstag und Bekanntmachung des Hinweises auf die Patenterteilung: **15.06.2016**
(21) Anmeldenummer: 10718620.7
(22) Anmeldetag: 14.05.2010
(51) Int. Cl.: E04H 12/22, A45B 19/04, F16B 7/14

(54) **VORRICHTUNG ZUM VERBINDEN EINES BASISROHRES MIT MASTEN, INSBESONDERE VON STANDSCHIRMEN**
DEVICE FOR CONNECTING A BASE PIPE TO POLES, IN PARTICULAR OF STAND-UP UMBRELLAS
DISPOSITIF POUR RELIER UN TUBE DE BASE À DES MÂTS, NOTAMMENT DE PARASOLS

(30) Priorität: 03.06.2009 CH 8452009
(43) Veröffentlichungstag der Anmeldung: 11.01.2012
(73) Patentinhaber: GLATZ AG, 8212 Frauenfeld (CH)
(72) Erfinder: KAUFMANN, Ernst, CH-8548 Ellikon an der Thur (CH); GLATZ, Gustav, Adolf, CH-8500 Frauenfeld (CH)
(74) Vertreter: Schmauder & Partner AG Patent- & Markenanwälte VSP
(86) Internationale Anmeldenummer: PCT/EP2010/056678
(87) Internationale Veröffentlichungsnummer: WO 2010/139545

(56) Entgegenhaltungen:
- DE-A1- 10 257 515

## Beschreibung

### Technisches Gebiet

Die Erfindung betrifft eine Vorrichtung nach Anspruch 1 und Verwendung nach Anspruch 9, mit welcher Schirmmasten unterschiedlicher Querschnitt-Dimension in ihrer Höhen- und/oder Drehposition leicht gelöst, verstellt, entfernt, wieder eingesetzt, positioniert und im Basisrohr sicher festgehalten werden.

### Stand der Technik

Eine Vorrichtung der eingangs genannten Art ist insbesondere bei Sonnenschirmen bekannt. Dabei ist es nachteilig, dass solche Verbindungsvorrichtungen oft nicht auf den Durchmesser des zu verbindenden Mastes abgestimmt sind.

Es besteht das Bedürfnis nach einer Verbindungsvorrichtung zum Verbinden des Basisrohres eines Schirmsockels mit Schirmmasten unterschiedlicher Dimension, wobei die Verbindungsvorrichtung gleichwohl stabil und einwandfrei fixierend ausgebildet sein soll.

Eine einfache Art, Masten unterschiedlichen Durchmessers aufzunehmen, sind zunächst einmal direkt auf den Mast gerichtete Klemmschrauben einer Verbindungsvorrichtung mit oder ohne Druckstücke. Solche Verbindungen weisen aber eine ungenügende Klemmung auf, ausserdem sind sie vielfach unstabil und führen leicht zu einer Beschädigung zumindest des Mastes.

Aus der DE 102 57 515 A1 ist eine Klemmvorrichtung bekannt, bei der zum Festklemmen von zwei ineinander verschiebbaren Stangen drei Klemmsegmente verwendet werden, wobei ein Basissegment an der ersten Stange fest angeordnet sein soll und wenigstens zwei mittels eine Scharniers verschwenkbare Klemmsegmente die zweite Stange verschwenkbar umgreifen können. Diese Vorrichtung ist aufwändig und wenig flexibel. Insbesondere nachteilig ist der Vorschlag, das Basissegment an der Basisstange fest anordnen zu müssen. Die mittels eine Scharniers verschwenkbare Anordnung der weiteren Segmente ist verschleiss- und störanfällig. Die in der DE 102 57 515 A1 vorgeschlagene Hülse soll dort in etwa in der Mitte Vorsprünge aufweisen, was für eine mittels eine Scharniers verschwenkbare Anordnung der beiden genannten Segmente folgerichtig ist, aber für eine Anordnung ohne die beiden verschwenkbaren Teile wenig geeignet ist.

Aus der US 6 312 184 B1 ist eine Verbindungsvorrichtung zum Festklemmen von zwei ineinander verschiebbaren Stangen bekannt, die besonders nachteilig ist. Dort wird die Verbindung nämlich mit nur einer Klemmschraube hergestellt, so dass beim Lösen dieser Klemmschraube nicht nur der Mast - also der obere Teil - gelöst wird, sondern auch die Verbindungsvorrichtung vom Basisrohr. Dies führt zu unangenehmen und allenfalls sogar zu gefährlichen Situationen, wenn nur eine Person die Vorrichtung bedient bzw. die Bedienung der Vorrichtung ist sicher nur mit zwei Personen möglich.

### Darstellung der Erfindung

Aufgabe der vorliegenden Erfindung ist es, eine verbesserte, gattungsgemässe Verbindungsvorrichtung vorzuschlagen, die für Masten verschiedener Durchmesser verwendet werden kann. Dabei sollen die Nachteile der DE 102 57 515 A1 - insbesondere die nachteilige Ausgestaltung mit mittels eine Schamiers verschwenkbaren Hülsenteilen und die feste Anordnung des Basisteils und damit der gesamten Vorrichtung am Basisrohr - und der US 6 312 184 B1, wie oben beschrieben, vermieden werden.

Die Aufgabe der Erfindung wird durch eine Verbindungsvorrichtung nach Anspruch 1 gelöst. Dabei haben die Massnahmen der Erfindung zunächst einmal zur Folge, dass Einsatzhülsen verschiedener Dimensionen eingesetzt werden können, so dass ein weiter Bereich von Masten, also Masten verschiedenen Durchmessers, mit einem Rohr grösseren Durchmessers verbunden werden können, wobei die Haltekraft gegen ein Abdrehen oder Herausziehen des Mastes, typischerweise also des Schirmmastes, optimal ist. Der als Klemmhülse ausgebildete Hülsenteil ergibt sowohl ohne als auch mit eingesetzter Einsatzhülse eine gleichmässige Klemmwirkung über den Umfang des entsprechenden Mastes und minimiert dadurch ein Beschädigungsrisiko. Durch die Ausgestaltung mit der Verbindungshülse mit zwei - selbstverständlich miteinander verbundenen - Hülsenteilen, von denen eine für die Befestigung am Basisrohr und die andere für die Befestigung des Mastes ausgebildet ist, ohne dass die Verbindungshülse fest mit dem Basisrohr verbunden sein muss und die Ausgestaltung der Einsatzhülse und dem Zusammenwirken mit der Verbindungshülse werde die Nachteile des Standes der Technik, insbesondere die Nachteile der DE 102 57 515 A1 und der US 6 312 184 B1 vollständig überwunden.

Vorteilhafte Ausgestaltungen der Verbindungsvorrichtung sind in den Ansprüchen 2 bis 8 beschrieben.

Vorteilhafterweise sind Ist der Absatz zwischen den beiden Hülsenteilen umlaufend und die ausgebildet und die Vorsprünge der Einsatzhülse so angeordnet, dass sie eine axiale Fixierung der Einsatzhülse an der Stirnseite des Basisrohres ermöglichen.

Für bestimmte Anwendungen hat es sich als vorteilhaft erwiesen, wenn die Einsatzhülse in der den Vorsprüngen abgewandten Seite eine radiale Auskragung aufweist, um sie so beim Einsetzen zusätzlich zur oder an Stelle von der oben genannten axialen Fixierung an der Stirnseite des Basisrohres axial zu begrenzen und auch bei einer Verformung zu verhindern, dass sie in den Basisrohrteil eingedrückt wird.

Dadurch, dass der zweite Hülsenteil der erfindungsgemässen Verbindungsvorrichtung Aussparungen aufweist, in die die Vorsprünge der auswechselbaren Einsatzhülse eingreifen können, wird letztere in Drehrichtung formschlüssig gehalten. Die Aussparungen können verschiedenartig ausgebildet und angeordnet sein, so beispielsweise als Längsnuten auf der Innenseite des ersten Hülsenteiles, wodurch auch eine Fixierung der Einsatzhülse in axialer Richtung möglich ist, wenn die Verbindungsvorrichtung an einem Basisrohr angesetzt ist und dieses an Teilen der Einsatzhülse ansteht.

Besonders vorteilhaft ist es, wenn die verformbare zylindrische Einsatzhülse gemäss Anspruch 6 in radialer Richtung federnd ausgebildet ist und vorzugsweise unter einer gewissen Vorspannung radial nach aussen an der Klemmhülseanliegt. Dadurch kehrt die Einsatzhülse stets in die Ausgangslage zurück und erleichtert dadurch das Aus- und insbesondere das Einsetzen des Mastes.

Die Einsatzhülse kann als in Längsrichtung geschlitzte Hülse ausgebildet sein. Eine besonders einfache und wirksame Ausbildung der Einsatzhülse beschreibt der Anspruch 7. Die Einsatzhülse besteht zweckmässigerweise aus einem Werkstoff, der weicher ist als der Werkstoff des Mastes, für den die Verbindungsvorrichtung verwendet werden soll. Vorzugsweise besteht die Einsatzhülse aus Kunststoff.

Besonders vorteilhaft ist es, wenn die Einsatzhülse nach Anspruch 8 ihrerseits Rastmittel zur einrastenden Aufnahme und Fixierung einer weiteren analogen Einsatzhülse entsprechend kleineren Durchmessers aufweist, sodass auch mehrere Einsatzhülsen gestaffelter Durchmesser ineinander gesteckt gleichzeitig zur Anwendung gelangen können, wodurch sich der Einsatzbereich der Verbindungsvorrichtung weiter vergrössern lässt.

Die Verbindungsvorrichtung ist für die verschiedensten Gebiete verwendbar, so zum Beispiel für Masten für Schilder und dergleichen. Besondere Vorzüge erbringt sie bei der Verwendung gemäss Anspruch 9 zum Verbinden eines Schirmmastes mit dem Basisrohrteil eines Sockels, so dass für Schirme unterschiedlicher Grössen und damit unterschiedlicher Durchmesser des Schirmstockes bzw. Schirmmastes nur ein Schirmsockeltypyp erforderlich ist und die Anpassung an die verschiedenen Durchmesser durch die Auswahl der entsprechenden Einsatzhülse gewährleistet ist.

Die vorbenannten sowie die beanspruchten und in den nachfolgenden Ausführungsbeispielen beschriebenen, erfindungsgemäss zu verwendenden Elemente unterliegen in ihrer Grösse, Formgestaltung, Materialverwendung und ihrer technischen Konzeption keinen besonderen Ausnahmebedingungen, so dass die in dem jeweiligen Anwendungsgebiet bekannten Auswahlkriterien uneingeschränkt Anwendung finden können.

### Kurze Beschreibung der Zeichnungen

Weitere Einzelheiten, Vorteile und Merkmale des Gegenstandes der vorliegenden Erfindung ergeben sich aus der nachfolgenden Beschreibung der dazu gehörenden Zeichnungen, in denen - beispielhaft - erfindungsgemässe Vorrichtungen erläutert werden. In den Zeichnungen zeigt:
- Figur 1: einen in einem Sockel angeordneten und mit einer Verbindungsvorrichtung fixierten Standschirm;
- Figur 2: die Verbindungsvorrichtung der Figur 1 im Vertikalschnitt;
- Figur 3: die Verbindungsvorrichtung der Figur 2, in Explosionsdarstellung;
- Figur 4: die Verbindungsvorrichtung gemäss Figur 2 in perspektivischer Darstellung;

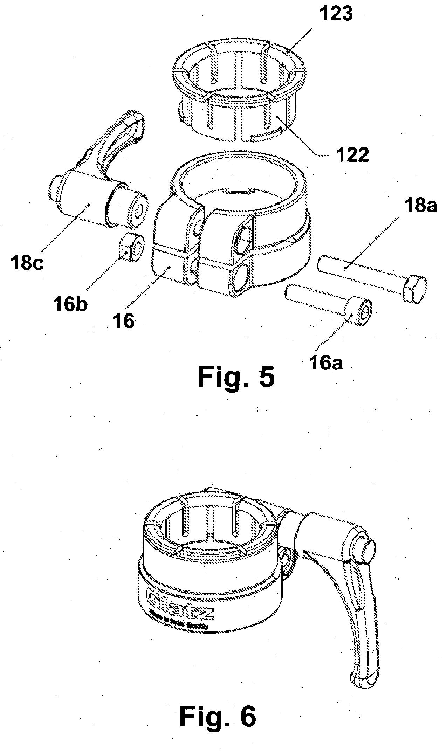

- Figur 5: die Verbindungsvorrichtung der Figur 2, in Explosionsdarstellung mit einer Einsatzhülse mit einer Auskragung gemäss einem zweiten Ausführungsbeispiel der Erfindung
- Figur 6: die Verbindungsvorrichtung gemäss Figur 5 in perspektivischer Darstellung.

### Wege zur Ausführung der Erfindung

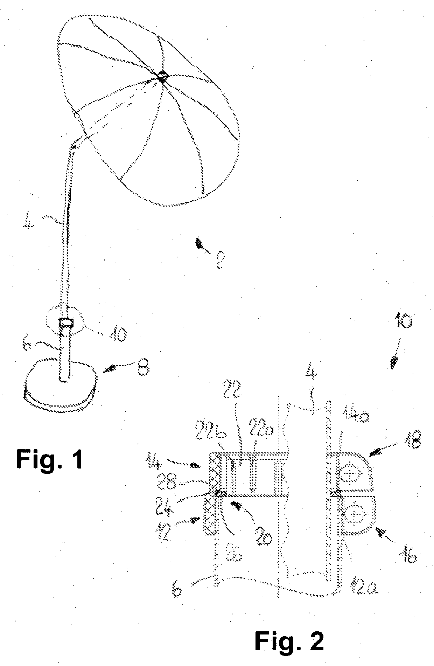

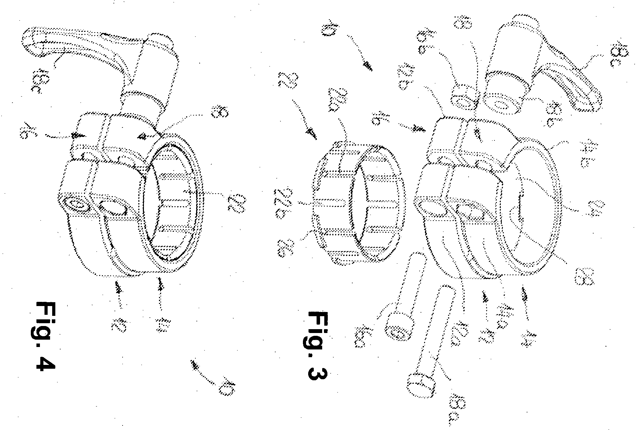

Zur Darstellung einer typischen Verwendung einer Verbindungsvorrichtung gemäss der vorliegenden Erfindung ist in Figur 1 ein Standschirm 2 dargestellt, der mit seinem Schirmmast 4 in einem Basisrohr 6 eines Standsockels 8 angeordnet ist und mittels einer in den Figuren 2 bis 4 näher dargestellten Verbindungsvorrichtung 10 teleskopartig verschiebbar und drehbar gehalten wird.

Die in den Figuren 2 bis 4 näher dargestellte Verbindungsvorrichtung 10 weist einen ersten Hülsenteil 12 zur Aufnahme eines Basisrohres 6 des Standsockels 8 - und einen zweiten Hülsenteil 14 zur Aufnahme eines Mastes 4 - hier des Schirmstockes 4 des Standschirmes 2 - auf. Der Mast 4 ist im vorliegenden Beispiel als Rohr dargestellt, kann aber auch als Vollprofil ausgebildet sein.

Für die Befestigung des ersten Hülsenteiles ergeben sich verschieden Möglichkeiten, wie beispielsweise eine Schraubverbindung, wobei der Hülsenteil ein Innengewinde aufweist, das auf ein Aussengewinde des Rohres zu schrauben ist. Im vorliegenden Beispiel ist der erste Hülsenteil 12 als Klemmhülse ausgebildet, deren Klemmlaschen 12a, 12b mittels einer Spannvorrichtung 16 aus Schraube 16a und Mutter 16b gegen das Rohr 6 verspannbar sind. Der zweite Hülsenteil 14 ist ebenfalls als Klemmhülse ausgebildet, deren Klemmlaschen 14a, 14b mittels einer Spannvorrichtung 18 aus Schraube 18a und Mutter 18b gegen den Mast 4 verspannbar sind. Die Mutter 18b ist mit einem Handgriff 18c zur Betätigung von Hand versehen. Anstelle der Schraubverbindungen können auch andere Spannvorrichtungen z.B. mit Exzenternocken zum Einsatz kommen.

Der zweite Hülsenteil 14 enthält Rastmittel 20 zur einrastbaren Aufnahme und axialen Fixierung einer radial verformbaren zylindrischen Einsatzhülse 22. Die Rastmittel 20 sind als auf der Innenseite des zweiten Hülsenteiles 14 am Umfang angeordnete Aussparungen 24 ausgebildet, die zur Aufnahme von Vonsprüngen 26 dienen, welche an der Einsetzhülse 4 angeordnet sind. Die Aussparungen 24 sind in einem umlaufenden Absatz 28 angeordnet, der zwischen dem ersten Hülsenteil 12 und dem zweiten Hülsenteil 14 ausgebildet ist. Dabei ist die Anordnung so getroffen, dass die Stirnseiten der Vorsprünge 26 im Wesentlichen bündig mit der Fläche des Absatzes sind, der als Anschlag beim Ansetzen am Basisrohr 6 dient.

Die Einsatzhülse 22 ist durch wechselseitige Anordnung von Aussparungen 22a, 22b meanderartig ausgebildet derart, dass sie federnd und in radialer Richtung verformbar ist. Die Einsatzhülse 22 besteht zweckmässigerweise aus einem Material, das weicher ist als das Material des aufzunehmenden Mastes 4, vorzugsweise besteht sie aus Kunststoff. Die an der Einsatzhülse ausgebildeten Vorsprünge 26 können beliebig ausgebildet sein, beispielsweise als Nocken, Rippen und dergleichen.

Gemäss einem zweiten Ausführungsbeispiel ist an der Einsetzhülse 122 eine an der oberen Seite eine Auskragung 123 ausgebildet, die auf dem Oberteil der Verbindungshülse aufsetzt und ein Einsetzen der Einsatzhülse 122 in die Verbindungshülse begrenzt. Dies ist insbesondere dann von Vorteil, wenn die Einsatzhülse mehrfach eingesetzt und wieder herausgenommen wurde und verhindert in jedem Fall, dass die Einsatzhülse 122 zu weit in die Verbindungshülse eingesetzt wird.

### Bezugszeichenliste

- 2: Standschirm
- 4: Schirmmast
- 6: Basisrohr
- 8: Standsockel
- 10: Verbindungsvorrichtung
- 12: erster Hülsenteil
- 12a: Klemmlasche
- 12b: Klemmlasche
- 14: zweiter Hülsenteil
- 14a: Klemmlasche
- 14b: Klemmlasche
- 16: Spannvorrichtung
- 16a: Schraube
- 16b: Mutter
- 18: Spannvorrichtung
- 18a: Schraube
- 18b: Mutter
- 18c: Handgriff
- 20: Rastmittel
- 22: Einsatzhülse
- 22a: Aussparung
- 22b: Aussparung
- 24: Aussparung
- 26: Vorsprung
- 28: Absatz
- 122: Einsatzhülse mit Auskragung
- 123: Auskragung der Einsatzhülse 122

## Patentansprüche

1. Vorrichtung zum Verhindert eines Basisrohres (6) mit einem Mast (4), mit einer Verbindungshülse und einer auswechselbaren, radial verformbaren, zylindrischen Einsatzhülse (22), wobei die Verbindungshülse einen ersten Hülsenteil (12) zum Fixieren am Basisrohr (6) und einen zweiten, als Klemmhülse ausgebildeten Hülsenteil (14) zur Aufnahme und axialen Fixierung der Einsatzhülse (22, 122) und des Mastes (4) umfasst,
**dadurch gekennzeichnet, dass** zwischen dem ersten und dem zweiten Hülsenteil (12, 14) ein Absatz ausgebildet ist und die Einsetzhülse (22, 122) an ihrem unteren Rand Vorsprünge (26) aufweist, so dass die Vorsprünge (26) mit dem Absatz (28) verrastbar sind,
wobei die beiden Hülsenteile (12, 14) umlaufend fest miteinander verbunden sind.

2. Vorrichtung nach Anspruch 1, **dadurch gekennzeichnet, dass** der Absatz (28) in der Verbindungshülse umlaufend ausgebildet ist.

3. Vorrichtung nach einem der Ansprüche 1 oder 2, **dadurch gekennzeichnet, dass** die Vorsprünge (26) der Einsatzhülse (22, 122) zur axialen Fixierung der Einsatzhülse (22, 122) an der Stirnseite des Basisrohres angeordnet sind.

4. Vorrichtung nach einem der Ansprüche 1 bis 3, **dadurch gekennzeichnet, dass** die Einsatzhülse (122) in der den Vorsprüngen (26) abgewandten Seite eine radiale, den oberen Teil des zweiten Hülsenteil (14) überlappende Auskragung (123) zur axialen Fixierung der Einsatzhülse im zweiten Hülsenteil (14) aufweist.

5. Vorrichtung nach einem der Ansprüche 1 bis 4, **dadurch gekennzeichnet, dass** der zweite Hülsenteil (14) Aussparungen (24) aufweist, in die die Vorsprünge (26) der Einsatzhülse (22, 122) eingreifen können und die Einsatzhülse (22, 122) in Drehrichtung fixieren.

6. Vorrichtung nach einem der Ansprüche 1 bis 5, **dadurch gekennzeichnet, dass** die Einsatzhülse (22, 122) in radialer Richtung federnd ausgebildet ist.

7. Vorrichtung nach einem der Ansprüche 1 bis 6, **dadurch gekennzeichnet dass** die Einsetzhülse (22, 122) durch wechselartig angeordnete Aussparungen (22a, 22b) meanderartig ausgebildet ist.

8. Vorrichtung nach einem der Ansprüche 1 bis 7, **dadurch gekennzeichnet, dass** die Einsatzhülse (22, 122) ihrerseits Rastmittel zur einrastenden Auf nahme und Fixierung einer weiteren analogen Einsatzhülse entsprechend kleineren Durchmessers aufweist.

9. Verwendung der Vorrichtung nach einem der Ansprüche 1 bis 8 zur Verbindung eines Schirmmastes (4) mit dem Basisrohr (6) eines Sockels (8).

## Claims

1. A device for connecting a base pipe (6) to a pole (4), comprising a connecting sleeve and an exchangeable, radially deformable cylindrical insertion sleeve (22), wherein the connecting sleeve comprises a first sleeve part (12) for fixing to the base pipe (6) and a second sleeve part (14), which is embodied as a clamping sleeve, for receiving and axially fixing of the insertion sleeve (22, 122) and of the pole (4), **characterized in that** a step is formed between the first and second sleeve part (12, 14) and that the insertion sleeve (22, 122) has projections (26) at the lower edge thereof such that the projections (26) are engageable with the step (28), the two sleeve parts (12, 14) being connected to each other in a circumferentially fixed manner.

2. The device according to claim 1, **characterized in that** the step (28) is circumferentially formed in the connecting sleeve.

3. The device according to one of claims 1 or 2, **characterized in that** the projections (26) of the insertion sleeve (22, 122) are disposed at the front side of the base pipe for axially fixing the insertion sleeve (22, 122).

4. The device according to one of claims 1 to 3, **characterized in that** the insertion sleeve (122) has, at the side thereof pointing away from the projections (26), a radially protruding flange (123) overlapping the upper part of the second insertion sleeve for axially fixing the insertion sleeve in the second sleeve part (14).

5. The device according to one of claims 1 to 4, **characterized in that** the second sleeve part (14) comprises recesses (24) in which the projections (26) of the insertion sleeve (22, 122) can engage so at to fix the insertion sleeve (22, 122) in the rotating direction.

6. The device according to one of claims 1 to 5, **characterized in that** the insertion sleeve (22, 122) is embodied so as to be resilient in the radial direction.

7. The device according to one of claims 1 to 6, **characterized in that** the insertion sleeve (22, 122) is formed in a meandering manner by alternately arranged recesses (22a, 22b).

8. The device according to one of claims 1 to 7, **characterized in that** the insertion sleeve (22, 122) has, for its part, locking means for engagingly accommodating and fixing a further similar insertion sleeve of correspondingly smaller diameter.

9. Use of the device according to one of claims 1 to 8 for connecting a shade pole (4) to the base pipe (6) of a base (8).

## Revendications

1. Procédé permettant de relier un tube de base (6) à un mât (4) comprenant un manchon de liaison et un manchon d'insertion cylindrique interchangeable (22) déformable radialement, le manchon de liaison comprenant une première partie de manchon (12) destinée à permettre sa fixation sur le tube de base (6) et une seconde partie de manchon (14) réalisée sous la forme d'un manchon de serrage destinée à recevoir et à permettre la fixation axiale du manchon d'insertion (22, 122) et du mât (4),
**caractérisé en ce qu'**
un épaulement est formé entre la première partie de manchon (12) et la seconde partie de manchon (14), et le manchon d'insertion (22, 122) comporte sur son bord inférieur des saillies (26) pouvant être encliquetées avec l'épaulement (28), les deux parties de manchon (12, 14) étant reliées rigidement sur leur périphérie.

2. Dispositif conforme à la revendication 1,
**caractérisé en ce que**
l'épaulement (28) est réalisé sur la périphérie du manchon de liaison.

3. Dispositif conforme à l'une des revendications 1 et 2,
**caractérisé en ce que**
les saillies (26) de ce manchon d'insertion (22, 122) sont installées pour permettre la fixation de ce manchon d'insertion (22, 122) sur la face frontale du tube de base.

4. Dispositif conforme à l'une des revendications 1 à 3,
**caractérisé en ce que**
le manchon d'insertion (122) comporte, sur son côté situé à l'opposé des saillies (26) une collerette radiale (123) chevauchant la partie supérieure de la seconde partie de manchon (14) pour permettre la fixation axiale du manchon d'insertion dans la seconde partie de manchon (14).

5. Dispositif conforme à l'une des revendications 1 à 4,
**caractérisé en ce que**
la seconde partie de manchon (14) comprend des évidements (24) dans lesquels peuvent venir en prise les saillies (26) du manchon d'insertion (22, 122) et fixer ce manchon d'insertion (22, 122) dans la direction de rotation.

6. Dispositif conforme à l'une des revendications 1 à 5,
**caractérisé en ce que**
le manchon d'insertion (22, 122) est réalisé élastiquement en direction radiale.

7. Dispositif conforme à l'une des revendications 1 à 6,
**caractérisé en ce que**
le manchon d'insertion (22, 122) est réalisé en forme de méandres avec des évidements (22a, 22b) positionnés en alternance.

8. Dispositif conforme à l'une des revendications 1 à 7,
**caractérisé en ce que**
le manchon d'insertion (22, 122) comporte quant à lui des moyens d'encliquetage pour permettre la réception par encliquetage et la fixation d'un autre manchon d'insertion analogue ayant un plus petit diamètre correspondant.

9. Utilisation d'un dispositif conforme à l'une des revendications 1 à 8, pour permettre de relier le mât (4) d'un parasol avec le tube de base (6) d'un socle (8).
